# EUROPEAN PATENT APPLICATION

(11) **EP 4 304 016 A1**
(43) Date of publication of application: **10.01.2024**
(21) Application number: 22200917.7
(22) Date of filing: 11.10.2022
(51) Int. Cl.: H01Q 21/00, H01Q 1/38, H01Q 9/04, H01Q 21/28, H01Q 23/00, H01P 5/107, G01S 1/00

(54) **IMAGE RADAR APPARATUS WITH VERTICAL FEEDING STRUCTURE USING WAVEGUIDES**

(30) Priority: 07.07.2022 KR 20220083696
(71) Applicant: Smart Radar System, Inc., Seongnam-si, Gyeonggi-do 13486 (KR)
(72) Inventor: OH, Kyung Sub, 18442 Gyeonggi-do (KR); KIM, Yong Jae, 16802 Gyeonggi-do (KR)
(74) Representative: Grünecker Patent- und Rechtsanwälte PartG mbB

(57) **Abstract**

The present disclosure relates to an image radar apparatus with a vertical feeding structure using a waveguide, which can reduce the size of a radar apparatus while reducing a feeding loss, have excellent boresight gain, and reduce an interval between antenna patches due to the vertical feeding structure using waveguides.

## Description

### CROSS-REFERENCE TO RELATED APPLICATION(S)

This application claims priority from Korean Patent Application No. 10-2022-0083696, filed on July 07, 2022, in the Korean Intellectual Property Office, the disclosure of which is incorporated herein by reference in its entirety.

### BACKGROUND

### 1. Field

The present disclosure relates to an image radar, and more particularly, to an image radar apparatus with a vertical feeding structure using waveguides.

### 2. Description of Related Art

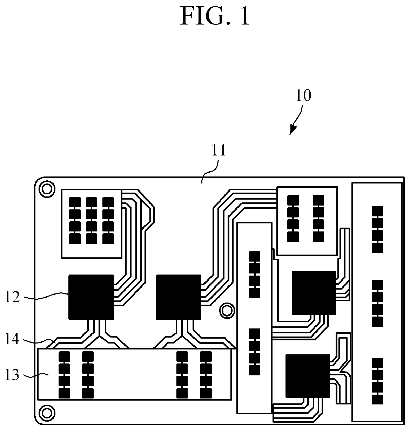

FIG. 1 is a diagram illustrating a conventional image radar. As shown in FIG. 1, in an image radar 10, a radar chip 12 and antenna patches 13 are typically disposed on a printed circuit board (PCB) 11.

However, the image radar 10 has a disadvantage in that a feeding loss increases due to a longer feeding line 14 as the resolution is smaller, and since the antenna patch 13 cannot be disposed in the space occupied by the radar chip 12 and surrounding components thereof, nor in the space occupied by the feeding line 14, the area of the PCB 11 needs to be increased as much as the spaces, and thus there is a problem in that the size of the image radar 10 increases.

Korean Patent Registration No. 10-2001668 (published on July 18, 2019) describes a waveguide slot array antenna for a radar. In a radar employing a waveguide slot array antenna, a radiation aperture including a radiation slot and a feeding surface including a feeding waveguide are stacked.

The radar employing such a waveguide slot array antenna has an advantage of reducing the size of a radar apparatus compared to the conventional image radar shown in FIG. 1 because an antenna, a feeding line, and a radar chip are vertically stacked.

However, the radar employing a waveguide slot array antenna has a disadvantage in that the slot array antenna has a beam width of 100 degrees or more in a narrow slot direction, thereby lowering boresight gain, that is, the gain in the center direction of a main lobe of a radio wave radiated from the antenna.

In addition, in order to prevent a grating lobe from occurring within +/-50 degrees when used as an image radar, a minimum interval between antennas must be within 0.6 wavelengths, but the waveguide slot array antennas require a greater interval than the interval, and thus there is a problem in that the grating lobe occurs.

Therefore, the inventor of the present disclosure has studied an improved image radar apparatus with a vertical feeding structure using waveguides which can reduce the size of the radar apparatus while reducing a feeding loss, have excellent boresight gain, and reduce an interval between antenna patches.

### [Prior Art Document]

### [Patent Document]

Korean Patent Registration No. 10-2001668 (published on July 18, 2019)

### SUMMARY

The present disclosure is directed to providing an image radar apparatus with a vertical feeding structure using waveguides which can reduce the size of the radar apparatus while reducing a feeding loss, have excellent boresight gain, and reduce an interval between antenna patches.

According to one aspect of the present disclosure, an image radar apparatus with a vertical feeding structure using waveguides includes: at least one transmitting antenna patch configured to radiate a radar signal; at least one receiving antenna patch configured to receive a radar signal reflected from a target; a sub-printed circuit board (PCB) on which the at least one transmitting antenna patch and the at least one receiving antenna patch are mounted; a radar chip configured to process the radar signal radiated through the at least one transmitting antenna patch or received through the at least one receiving antenna patch; a main PCB on which the radar chip is mounted; and a feeding waveguide disposed between the main PCB and the sub-PCB and configured to feed the radar chip mounted on the main PCB, and the at least one transmitting antenna patch and the at least one receiving antenna patch mounted on the sub-PCB.

According to an additional aspect of the present disclosure, the image radar apparatus may further include a main feeding line electrically connecting the radar chip mounted on the main PCB and the feeding waveguide.

According to an additional aspect of the present disclosure, the main feeding line may be patterned on the main PCB.

According to an additional aspect of the present invention, the image radar apparatus may further include a sub-feeding line electrically connecting the at least one transmitting antenna patch and the at least one receiving antenna patch mounted on the sub-PCB, and the feeding waveguide.

According to an additional aspect of the present disclosure, the sub-feeding line may be patterned on the sub-PCB.

According to an additional aspect of the present disclosure, a plurality of feeding waveguides may be stacked and disposed between the main PCB and the sub-PCB.

According to an additional aspect of the present disclosure, the image radar apparatus may further include an antenna cover coupled to a front surface of the sub-PCB to prevent external exposure of the at least one transmitting antenna patch and the at least one receiving antenna patch mounted on the sub-PCB.

### BRIEF DESCRIPTION OF THE DRAWINGS

The above and other objects, features and advantages of the present disclosure will become more apparent to those of ordinary skill in the art by describing in detail exemplary embodiments thereof with reference to the accompanying drawings, in which:
FIG. 1 is a diagram illustrating a conventional image radar;
FIG. 2 is a perspective view illustrating a configuration of one exemplary embodiment of an image radar apparatus with a vertical feeding structure using waveguides according to the present disclosure;
FIG. 3 is a bottom view illustrating a configuration of one exemplary embodiment of the image radar apparatus with the vertical feeding structure using waveguides according to the present disclosure; and
FIG. 4 is a side view illustrating a configuration of one exemplary embodiment of the image radar apparatus with the vertical feeding structure using waveguides according to the present disclosure.

### DETAILED DESCRIPTION

Hereinafter, the present disclosure will be described in detail so that those skilled in the art can easily understand and reproduce the present disclosure through exemplary embodiments described with reference to the accompanying drawings. Although specific exemplary embodiments are illustrated in the drawings and detailed descriptions related thereto are set forth, this is not intended to limit various exemplary embodiments of the present disclosure to a specific form.

In describing the present disclosure, when it is determined that a detailed description of related known functions or configurations may unnecessarily obscure the gist of the exemplary embodiments of the present disclosure, the detailed description thereof will be omitted.

When a component is said to be "connected" or "linked" to another component, it should be understood that an additional component may exist in the middle, although the component may be directly connected or linked to the other component.

On the other hand, when a component is said to be "directly connected" or "directly linked" to another component, it should be understood that no other component exists in the middle.

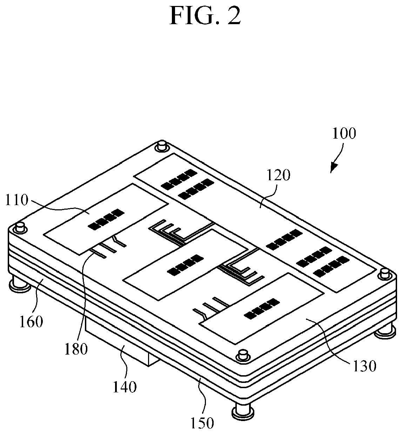

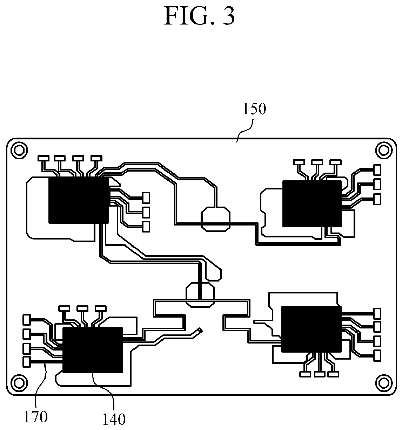

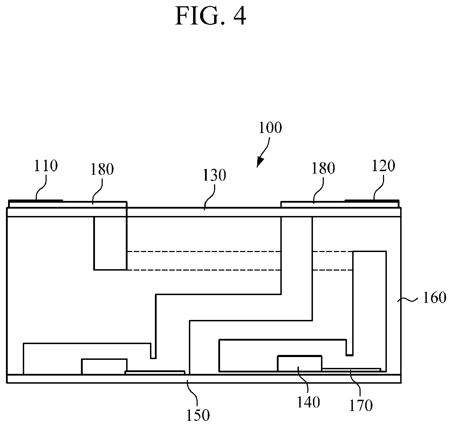

FIGS. 2 to 4 are a perspective view, a bottom view, and a side view illustrating a configuration of one exemplary embodiment of an image radar apparatus with a vertical feeding structure using waveguides according to the present disclosure. As shown in FIGS. 2 to 4, the image radar apparatus with the vertical feeding structure using waveguides 100 according to the present disclosure includes at least one transmitting antenna patch 110, at least one receiving antenna patch 120, a sub-printed circuit board (PCB) 130, a radar chip 140, a main PCB 150, and a feeding waveguide 160.

At least one transmitting antenna patch 110 radiates a radar signal. In this case, when there are a plurality of transmitting antenna patches 110, an interval between the transmitting antenna patches may be implemented to be half the wavelength of a radar signal wavelength.

At least one receiving antenna patch 120 receives a radar signal reflected from a target. In this case, when there are a plurality of receiving antenna patches 120, an interval between the receiving antenna patches may be implemented to be half the wavelength of a radar signal wavelength.

At least one transmitting antenna patch 110 and at least one receiving antenna patch 120 are mounted on the sub-PCB 130. For example, when there are a plurality of transmitting antenna patches 110 and receiving antenna patches 120, the transmitting antenna patches 110 may be horizontally disposed and mounted on the sub-PCB 130, and the receiving antenna patches 120 may be vertically disposed and mounted on the sub-PCB 130, but are not limited thereto.

In this case, the main reason for mounting at least one transmitting antenna patch 110 and at least one receiving antenna patch 120 on the sub-PCB 130 is that an image radar requires a beam width of 100 degrees or less in a horizontal direction of a radar signal having a 3dB gain radiated or received through a single antenna, and a minimum antenna interval of 0.6 wavelength or less.

The radar chip 140 processes a radar signal radiated through at least one transmitting antenna patch 110 or received through at least one receiving antenna patch 120.

For example, the radar chip 140 may include a transmitting module including a power amplifier (PA, not shown in the drawings) configured to amplify a frequency signal radiated through the transmitting antenna patch 110, and a frequency multiplier (not shown in the drawings) configured to output the power of an n integer multiple output frequency of an input frequency to the power amplifier (PA).

In addition, the radar chip 140 may include a receiving module including a low noise amplifier (LNA, not shown in the drawings) configured to amplify a weak frequency signal received through the receiving antenna patch 120 with low-noise, and a mixer (not shown in the drawings) configured to perform a frequency transition by multiplying the frequency signal radiated through the transmitting antenna patch 110 and the frequency signal received through the receiving antenna patch 120.

Meanwhile, the radar chip 140 controls transmission and reception of a frequency signal, but may include a control unit (not shown in the drawings) configured to detect a target (object) by analyzing a frequency transition of a frequency signal output through the transmitting module and a frequency signal received through the receiving module. In this case, the control unit may be implemented to detect an object using a frequency modulated continuous wave (FMCW).

The radar chip 140 is mounted on the main PCB 150. In this case, the transmitting module and the receiving module modularized in the radar chip 140 may be physically implemented as separate radar chips, or may be implemented in one chip.

The feeding waveguide 160 is disposed between the main PCB 150 and the sub-PCB 130 to perform feeding between the radar chip 140 mounted on the main PCB 150, and at least one transmitting antenna patch 110 and at least one receiving antenna patch 120 mounted on the sub-PCB 130. In this case, a plurality of feeding waveguides 160 may implemented to be stacked and disposed between the main PCB 150 and the sub-PCB 130.

Accordingly, the present disclosure has a vertical feeding structure in which the feeding waveguide 160 configured to perform feeding is disposed between the main PCB 150 on which the radar chip 140 is mounted, and the sub-PCB 130 on which at least one transmitting antenna patch 110 and at least one receiving antenna patch 120 are mounted.

The feeding waveguide 160 disposed between the main PCB 150 and the sub-PCB 130 is electrically connected to the radar chip 140 mounted on the main PCB 150, and at least one transmitting antenna patch 110 and at least one receiving antenna patch 120 mounted on the sub-PCB 130 for feeding.

The present disclosure having a vertical feeding structure using the feeding waveguide 160 may reduce a length of a feeding line, thereby reducing a feeding loss.

In addition, since the radar chip 140, and at least one transmitting antenna patch 110 and at least one receiving antenna patch 120 may be disposed to overlap each other in a vertical direction in 3D space, the size of a PCB substrate may be reduced, so that the size of the radar apparatus may be reduced.

In addition, since the beam width of the radar signal having 3 dB gain in the azimuth direction is about 60 to 70 degrees, a boresight gain, that is, the gain in the central direction of a main lobe of a radio wave radiated from an antenna, is very good.

In addition, since an interval between the transmitting antenna patches 110 and an interval between the receiving antenna patches 120 may be reduced to half the wavelength of the radar signal, the size of the radar apparatus can be further reduced.

By implementing the radar apparatus in this way, the present disclosure can provide a small image radar apparatus having excellent radar performance which since the size of the radar apparatus can be reduced while reducing a feeding loss, the boresight gain is excellent, and an interval between antenna patches can be reduced due to the vertical feeding structure using waveguides.

Meanwhile, according to an additional aspect of the present disclosure, the image radar apparatus with a vertical feeding structure using waveguides 100 may further include a main feeding line 170. The main feeding line 170 electrically connects the radar chip 140 mounted on the main PCB 150 and the feeding waveguide 160. In this case, the main feeding line 170 may be implemented to be patterned on the main PCB 150.

By implementing the radar apparatus in this way, since the present disclosure reduces the length of the feeding line in the horizontal direction and feeds in the vertical direction through the feeding waveguide 160, the length of the feeding line in the horizontal direction can be reduced compared to the method of directly connecting the radar chip mounted on the existing PCB and the antenna in the horizontal direction through the feeding line, thereby reducing a feeding loss.

Meanwhile, according to an additional aspect of the present disclosure, the image radar apparatus with a vertical feeding structure using waveguides 100 may further include a sub-feeding line 180. The sub-feeding line 180 electrically connects at least one transmitting antenna patch 110 and at least one receiving antenna patch 120 mounted on the sub-PCB 130, and the feeding waveguide 160. In this case, the sub-feeding line 180 may be implemented to be patterned on the sub-PCB 130.

By implementing the radar apparatus in this way, since the present disclosure reduces the length of the feeding line in the horizontal direction and feeds in the vertical direction through the feeding waveguide 160, the length of the feeding line in the horizontal direction can be reduced compared to the method of directly connecting the radar chip mounted on the existing PCB and the antenna in the horizontal direction through the feeding line, thereby reducing a feeding loss.

Meanwhile, according to an additional aspect of the present disclosure, the image radar apparatus with a vertical feeding structure using waveguides 100 may further include an antenna cover 190. The antenna cover 190 is coupled to the front surface of the sub-PCB 130 to prevent external exposure of at least one transmitting antenna patch 110 and at least one receiving antenna patch 120 mounted on the sub-PCB 130. For example, the antenna cover 190 may be made of a metal material that does not interfere with transmission and reception of the radar signal.

By implementing the radar apparatus in this way, the present disclosure may protect at least one transmitting antenna patch 110 and at least one receiving antenna patch 120 mounted on the sub-PCB 130 from the outside through the antenna cover 190.

The present disclosure has an effect of providing a small image radar apparatus having excellent radar performance since the size of the radar apparatus can be reduced while reducing a feeding loss, the boresight gain is excellent, and an interval between antenna patches can be reduced due to a vertical feeding structure using waveguides.

Various exemplary embodiments disclosed in the present specification and drawings only provide specific examples to help understanding and are not intended to limit the scope of various exemplary embodiments of the present disclosure.

Therefore, the scope of various exemplary embodiments of the present disclosure should be interpreted that all changes or modifications derived based on the technical idea of various exemplary embodiments of the present disclosure are included in the scope of various exemplary embodiments of the present disclosure.

The present disclosure can be industrially used in the field of image radar-related technology and its application technology.

## Claims

1. An image radar apparatus with a vertical feeding structure using waveguides, comprising:
at least one transmitting antenna patch configured to radiate a radar signal;
at least one receiving antenna patch configured to receive a radar signal reflected from a target;
a sub-printed circuit board (PCB) on which the at least one transmitting antenna patch and the at least one receiving antenna patch are mounted;
a radar chip configured to process the radar signal radiated through the at least one transmitting antenna patch or received through the at least one receiving antenna patch;
a main PCB on which the radar chip is mounted; and
a feeding waveguide disposed between the main PCB and the sub-PCB and configured to feed the radar chip mounted on the main PCB and the at least one transmitting antenna patch and the at least one receiving antenna patch mounted on the sub-PCB.

2. The image radar apparatus of claim 1, further comprising a main feeding line electrically connecting the radar chip mounted on the main PCB and the feeding waveguide.

3. The image radar apparatus of claim 2, wherein the main feeding line is patterned on the main PCB.

4. The image radar apparatus of claim 1, further comprising a sub-feeding line electrically connecting the at least one transmitting antenna patch and the at least one receiving antenna patch mounted on the sub-PCB, and the feeding waveguide.

5. The image radar apparatus of claim 4, wherein the sub-feeding line is patterned on the sub-PCB.

6. The image radar apparatus of claim 1, wherein a plurality of feeding waveguides are stacked and disposed between the main PCB and the sub-PCB.

7. The image radar apparatus of claim 1, further comprising an antenna cover coupled to a front surface of the sub-PCB to prevent external exposure of the at least one transmitting antenna patch and the at least one receiving antenna patch mounted on the sub-PCB.
